# EUROPÄISCHE PATENTSCHRIFT

(11) **EP 2 204 511 B1**
(45) Veröffentlichungstag und Bekanntmachung des Hinweises auf die Patenterteilung: **23.03.2016**
(21) Anmeldenummer: 09015191.1
(22) Anmeldetag: 08.12.2009
(51) Int. Cl.: E04B 1/346

(54) **GEBÄUDE MIT EINER DREHVORRICHTUNG**
BUILDING WITH A ROTATION DEVICE
BÂTIMENT DOTÉ D'UN DISPOSITIF DE ROTATION

(30) Priorität: 08.12.2008 DE 202008016148 U
(43) Veröffentlichungstag der Anmeldung: 07.07.2010
(73) Patentinhaber: PFO Private Family Office GmbH, 72186 Empfingen (DE)
(72) Erfinder: Johannsen, Walter, 72296 Schopfloch (DE)
(74) Vertreter: Klocke, Peter

(56) Entgegenhaltungen:
- EP-A2- 1 818 472
- DE-U1-202004 003 158
- FR-A- 1 544 684
- US-A- 1 703 388

## Beschreibung

Die Erfindung betrifft ein Gebäude mit den Merkmalen im Oberbegriff von Anspruch 1.

Unter Gebäudeoberteil wird in diesem Zusammenhang ein Gebäudedach, ein Dachgeschoss mit Gebäudedach oder ein Zwischengeschoss mit einem darauf folgenden Dachgeschoss mit Gebäudedach verstanden, als Gebäudeunterteil ein Erdgeschoss, ein Kellergeschoss oder eine Bodenplatte des Gebäudes.

Herkömmliche Gebäude sind durch ihre Ausrichtung bezüglich den vier Himmelsrichtungen gekennzeichnet. Die Ausrichtung bestimmt insbesondere die Nutzungsmöglichkeiten der im Innern der Gebäude angeordneten Räumlichkeiten sowie der Außenwandflächen und der Dachflächen der Gebäude. Dabei können nach Süden gerichtete Gebäudeteile im Hinblick auf die Sonne besonders vorteilhaft genutzt werden. Es ist bekannt, dass die Sonneneinstrahlung die Ausleuchtung und die Erwärmung von Räumen, das Aufheizverhalten des Gebäudes sowie die Energieausbeute von außenseitig an dem Gebäude vorgesehenen elektrischen Sonnengeneratoren bzw. thermischen Sonnenkollektoren wesentlich beeinflusst. Dabei ist die Stärke der Sonneneinstrahlung und der Einfallswinkel der Sonnenstrahlen stark Jahreszeit abhängig.

Vorrichtungen zum Drehen von Gegenständen und Gebäuden sind in ihrem Grundprinzip allgemein bekannt und existieren in den unterschiedlichsten Ausführungsformen und Größen. Auch für Gebäude der eingangs genannten Art sind sie seit langem in der Praxis im Einsatz. Sie werden dazu genutzt, um beispielsweise das gesamte Gebäude oder das Dach des Gebäudes der Bewegung der Sonne nachzuführen, so dass über den Tag eine möglichst konstante optimale Sonneneinstrahlung oder Sonnenbeaufschlagung erreicht wird. Bei solchen Gebäuden wird die Drehbarkeit dazu genutzt, die Sonnenbestrahlung einer bestimmten Fläche oder die Sonneneinstrahlung in einen bestimmten Raum über einen möglichst langen Zeitraum zu erhalten. Zu Gebäuden mit drehbaren Gebäudeteilen wird beispielhaft auf das deutsche Gebrauchsmuster DE 20 2004 003 158 U1 sowie die europäische Offenlegungsschrift EP 1 818 472 A2 verwiesen.

Die DE 20 2004 003 158 U1 beschreibt eine mittels einer Elektrosteuerung der Sonne nachführbare Mehrzweckhalle in Leichtbauweise. Die Mehrzweckhalle weist ein Pultdach mit einer Fotovoltaikanlage zur Energiegewinnung auf. Die das Dach tragenden Wände und die Bodenplatte der Halle sind derart voneinander getrennt, dass sich die Wände und das Dach der Halle nach der Sonne drehen können, wohingegen die Bodenplatte statisch bleibt und als Verankerung benutzt wird.

Die EP 1 818 472 A2 offenbart ein in Abhängigkeit von dem relativen Sonnenstand im Tagesverlauf nachführbares Solaranlagengebäude, das aus einem Gebäudeunterteil und einem darauf gelagerten Gebäudeoberteil mit Dach besteht. Auf dem Dach sind Solarmodule montiert. Das Solaranlagengebäude weist eine Antriebseinrichtung auf, mit der das Gebäudeoberteil und das Gebäudeunterteil rotatorisch gegeneinander verdrehbar sind. An dem Gehäuseunterteil ist zumindest eine antreibbare Rolle ortsfest gelagert, über die eine an dem Gebäudeoberteil fixierte Rundlaufschiene drehbar geführt ist, so dass eine Relativbewegung zwischen dem Gebäudeoberteil mit Dach und dem Gebäudeunterteil erfolgen kann.

Die US 1 703 388 A offenbar ein Gebäude, mit einem feststehenden Gebäudeunterteil und einem darauf drehbar gelagerten Gebäudeoberteil, mit einem Rundlaufschienenpaar, das einander zugeordnete, gegeneinander verdrehbare ringförmige Rundlaufschienen aufweist, die eine rotatorische Bewegung des Gebäudeoberteils gegenüber dem Gebäudeunterteil um eine räumlich feste vertikale Achse im Zentrum des Rundlaufschienenpaares ermöglichen, wobei eine untere Rundlaufschiene an einer oberen Tragkonstruktion des Gebäudeunterteils und eine obere Rundlaufschiene an einer unteren Tragkonstruktion des Gebäudeoberteils drehfest angeordnet ist, wobei die untere Rundlaufschiene U-förmig mit nach oben gerichteten seitlichen Führungsleisten ausgebildet ist, die eine fortlaufende Folge von Wälzkörpern zwischen den Führungsleisten aufnimmt, auf denen sich die obere Rundlaufschiene abstützt. Die Wälzkörper grenzen dabei abstandsfrei aneinander an.

Bei den in den beiden vorstehend genannten Druckschriften behandelten Gebäuden wird als Nachteil angesehen, dass die eingesetzten Drehvorrichtungen zum einen ein hohes Laufgeräusch verursachen und zum anderen Kälte/Wärmebrücken zwischen den Gebäudeteilen bilden. Dies ist insbesondere bei Wohn- und Bürogebäuden unvorteilhaft.

Ausgehend von dem zitierten Stand der Technik liegt der Erfindung die Aufgabe zugrunde, ein Gebäude mit mindestens einem drehbaren Dach vorzuschlagen, das eine verbesserte Laufruhe beim Drehen des Daches und eine verbesserte Abdichtung zwischen dem statischen und dem beweglichen Gebäudeteil aufweist.

Diese Aufgabe wird erfindungsgemäß durch ein Gebäude mit den Merkmalen des Anspruchs 1 gelöst. Weitere vorteilhafte Ausgestaltungen sind den Unteransprüchen zu entnehmen.

Die Wälzkörper sind lose in dem Aufnahmekanal der unteren Rundlaufschiene in deren Umfangsrichtung durch Abstandshalter voneinander beabstandet, in einer Reihe oder in mehreren Reihen nebeneinander angeordnet.

Das Gebäude weist eine untere Rundlaufschiene auf, die U-förmig mit zwei nach oben gerichteten seitlichen Führungsleisten ausgebildet ist, und die eine fortlaufende Folge von Wälzkörpern zwischen den Führungsleisten aufnimmt, auf denen sich die obere Rundlaufschiene abstützt. Dabei ist die untere Rundlaufschiene mit der Basis an der oberen Tragkonstruktion des Gebäudeunterteils und mit nach oben weisenden Schenkeln in Form der Führungsleisten festgelegt, so dass ein nach oben offener ringförmiger Aufnahmekanal für die Wälzkörper gebildet und für deren Aufnahme von oben einfach zugänglich ist. Als Wälzkörper sind beispielsweise Kugeln, Rollen, Tonnen, Kegel oder andere Rotationskörper aus Stahl, Keramik oder speziellen, extra harten Kunststoffen in den Aufnahmekanal eingesetzt.

Das Material der unteren und der oberen Rundlaufschiene weist mindestens eine den Wälzkörpern entsprechende Härte auf und kann dem Material der Wälzkörper entsprechen.

In Verbindung mit der oberen Rundlaufschiene, die auf den Wälzkörpern aufliegt, wird ein Wälzlager nachgebildet, bei dem die Reibung zwischen den einzelnen Wälzkörpern und der unteren sowie der oberen ringförmigen Rundlaufschiene erheblich reduziert ist. Dies erleichtert eine relative Bewegung des Gebäudeoberteils gegenüber dem Gebäudeunterteil extrem und ermöglicht damit auch eine geräuscharme rotatorische Bewegung des Gebäudeoberteils um die räumlich feste vertikale Achse im Zentrum der Rücklaufschienenpaares. Der Geräuschpegel ist gegenüber den aus dem Stand der Technik bekannten Drehvorrichtungen deutlich erniedrigt. Dabei kann die vertikale Achse, um die das Gebäudeoberteil drehbar ist, fiktiv oder real sein. Die obere Rücklaufschiene kann an sich eine beliebige Querschnittsform aufweisen, wenn gewährleistet ist, dass eine plane Abstützfläche für die Wälzkörper vorhanden ist. Vorzugsweise ist die obere Rundlaufschiene als Ringscheibe ausgebildet, sie kann jedoch auch U-förmig oder L-förmig im Querschnitt geformt sein.

Das Rundlaufschienenpaar, bestehend aus der unteren und der oberen Rundlaufschiene, mit dazwischen gelagerten Wälzkörpern, erstreckt sich idealerweise in den Randbereichen der Tragkonstruktionen des Gebäudeunterteils und des Gebäudeoberteils. Prinzipiell können auch mehrere solcher Rundlaufschienenpaare mit verschiedenem Durchmesser zwischen dem Gebäudeunterteil und dem Gebäudeoberteil konzentrisch zueinander vorgesehen sein. Bei der Verwendung von mindestens zwei derartigen Rundlaufschienenpaaren mit entsprechenden seitlichen Führungen kann unter Umständen auf eine reale zentrische Drehachse verzichtet werden.

Bevorzugt werden Stahlkugeln oder Stahlwalzen als Wälzkörper. Die Stahlkugeln weisen dabei eine typischen Durchmesser von 40 mm, die Stahlwalzen einen typischen Durchmesser von 90 mm auf. Solche Stahlwalzen oder Stahlkugeln sind kostengünstig und genügen den statischen und dynamischen Anforderungen.

Bei einer bevorzugten Variante sind die Wälzkörper in Umfangsrichtung der Rundlaufschienen voneinander beabstandet. Dies kann beispielsweise durch Distanzstücke aus Kunststoffmaterial oder einem beliebigen anderen druckfesten Material erreicht werden. Es ist auch möglich, die Wälzkörper mit Wälzkörperkäfigen auf Abstand zueinander zu halten, wobei der Wälzkörperkäfig aus einem dem Distanzstücken entsprechenden Material hergestellt sein kann. Die Wälzkörperkäfige, die eine Anzahl von Wälzkörpern seitlich umgreifen, können vorzugsweise miteinander verbindbar sein.

Bei einer Variante der Erfindung sind die Wälzkörper mindestens zweireihig nebeneinander in der unteren Rundlaufschiene angeordnet. Dabei können diese in Querrichtung der unteren Rundlaufschiene direkt aneinander anschließen oder von einer sich in Umfangsrichtung der unteren Rundlaufschiene erstreckenden mittleren Führungsleiste voneinander getrennt sein. Die umlaufende Führungsleiste kann Teil der unteren oder oberen Rundlaufschiene sein. Bevorzugt eine Anordnung, bei der die Wälzkörper in Querrichtung voneinander beabstandet sind und die mittlere Führungsleiste mit der oberen Rundlaufschiene verbunden ist.

Bei einer vorteilhaften Ausführungsform des erfindungsgemäßen Gebäudes ist zwischen der oberen und der unteren Rundlaufschiene, zumindest auf der dem Zentrum der Rundlaufschienen abgewandten Seite, ein sich in Umfangsrichtung erstreckendes Dichtungsprofil angeordnet. Das Dichtungsprofil, das beispielsweise als L-Profil oder T-Profil ausgebildet und aus einem Kunststoffmaterial hergestellt ist, verschließt einen horizontal verlaufenden Ringspalt, zwischen der unteren und der oberen Rundlaufschiene.

Das Dichtungsprofil ist vorzugsweise an dem zu der Gebäudeaußenseite hin weisenden Schenkel der unteren Rundlaufschiene derart befestigt, dass das eine freie Ende gegebenenfalls die beiden freien Enden des Dichtungsprofils die Rundlaufschienen gebäudeaußenseitig überlappen. Damit wird zum einen die Abdichtung zu dem umbauten Raum des Gebäudeunterteils und des Gebäudeoberteils beträchtlich verbessert und zum anderen das Rundlaufschienenpaar mit den einliegenden Wälzkörpern zu der Gebäudeaußenseite hin gekapselt.

Besonders vorteilhaft ist eine Ausführungsform des Dichtungsprofils mit an die Wälzkörper angepassten Durchbrüchen, in die die Wälzkörper zum Halten des Dichtungsprofils eingreifen. Damit entfällt die Befestigung des Dichtungsprofils an einer der beiden Rundlaufschienen. Ein derart ausgebildetes Dichtungsprofil bewegt sich beim Drehen des Gebäudeoberteils synchron mit der oberen Rundlaufschiene.

Als besonders zweckmäßig hat sich erwiesen, an der oberen Rundlaufschiene eine umlaufende Verzahnung auszubilden, die mit einem Antriebszahnrad eines Antriebsmotors kämmt. Damit kann das Gebäudeoberteil in Abhängigkeit von dem relativen Sonnenstand im Tagesverlauf auf einfache Weise gesteuert der Sonne nachgeführt werden.

Nachfolgend wird die Erfindung anhand eines in der Zeichnung dargestellten Ausführungsbeispiels erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein und zu mehreren bei unterschiedlichen Ausführungsformen der Erfindung verwirklicht sein. Es zeigen:
- Fig. 1: ein erfindungsgemäßes Gebäude, mit einem feststehenden Gebäudeunterteil und einem darauf drehbar gelagerten Gebäudeoberteil und mit zwischen dem Gebäudeunterteil und dem Gebäudeoberteil angeordneten Rundlaufschienen, in einer schematischen Darstellung;
- Fig. 2: das Rundlaufschienenpaar aus Figur 1 mit einliegenden Wälzkörpern in einer Querschnittsdarstellung; und
- Fig. 3: das Rundlaufschienenpaar aus Figur 2 in Draufsicht.

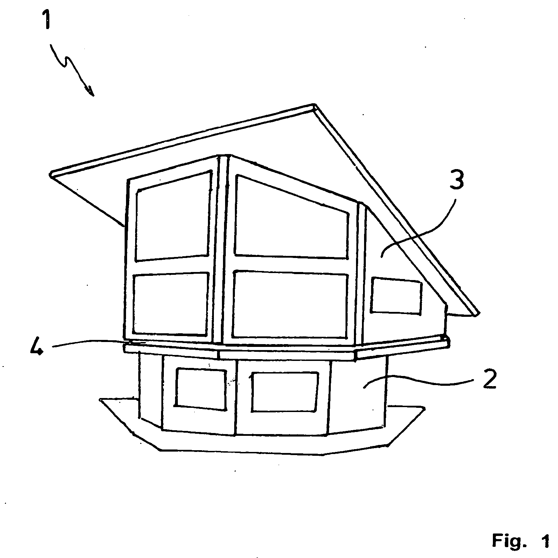

Die Figur 1 zeigt ein Ausführungsbeispiel des erfindungsgemäßen Gebäudes 1, das ein feststehendes Gebäudeunterteil 2 und ein darauf drehbar gelagertes Gebäudeoberteil 3 aufweist. Das Gebäudeoberteil 3 ist ein Dachgeschoss mit Pultdach. Zwischen dem Gebäudeunterteil 2 und dem Gebäudeoberteil 3 ist ein Rundlaufschienenpaar 4 angeordnet, das aus einer unteren Rundlaufschiene 5 und einer oberen Rundlaufschiene 6 besteht. Die untere Rundlaufschiene 5 ist an einer oberen Tragkonstruktion des Gebäudeunterteils 2 und die obere Rundlaufschiene 6 an einer unteren Tragkonstruktion des Gebäudeoberteils 3 drehfest angeordnet. Die obere und die untere Tragkonstruktion des Gebäudeunterteils 2 bzw. des Gebäudeoberteils 3 sind in der Zeichnung nicht dargestellt. Die Rundlaufschienen 5, 6 ermöglichen eine rotatorische Bewegung des Gebäudeoberteils 3 gegenüber dem Gebäudeunterteil 2 um eine räumlich feste vertikale Achse ins Zentrum der Rundlaufschienen 5, 6, die in der Zeichnung ebenfalls nicht dargestellt ist.

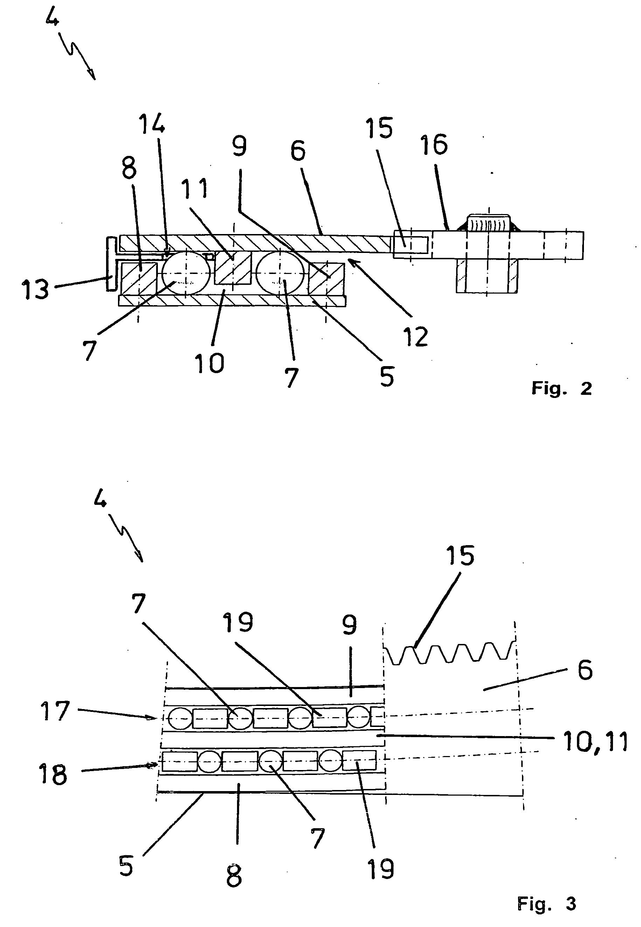

Die Figur 2 zeigt das Rundlaufschienenpaar 4 vergrößert in einer Querschnittsdarstellung. Die untere Rundlaufschiene 5 ist U-förmig und die obere Rundlaufschiene 6 scheibenförmig ausgebildet. Zwischen den beiden Rundlaufschienen 5, 6 sind in einer Doppelreihe kugelförmige Wälzkörper 7 aus Stahl angeordnet. Die beiden Schenkel der unteren Rundlaufschiene 5 bilden erste und zweite seitliche Führungsleisten 8, 9 für die Wälzkörper 7. Die beiden Reihen aus Stahlkugeln 7 weisen in Querrichtung des Rundlaufschienenpaares 4 einen seitlichen Abstand zueinander auf, wodurch ein ringförmiger Zwischenraum 10 bestimmt ist. In den Zwischenraum 10 taucht von oben her eine an der oberen Rundlaufschiene 6 angeordnete dritte mittlere Führungsleiste 11 ein.

Die obere Rundlaufschiene 6 stützt sich über die Stahlkugeln 7 an der unteren Rundlaufschiene 5 ab. Dabei weisen die sich in Umfangsrichtung entlang den Rundlaufschienen 5, 6 erstreckenden Führungsleisten 8, 9, 11 jeweils einen Abstand zu der Rundlaufschiene 5 bzw. zu der Rundlaufschiene 6 auf, aus der sie nicht hervortreten. Damit ergibt sich unter anderem ein Ringspalt 12 zwischen der unteren Rundlaufschiene 5 und der oberen Rundlaufschiene 6 auf der zur Außenwand des Gebäudes 1 zeigenden Seite des Rundlaufschienenpaares 4.

In den Ringspalt 12 greift ein Dichtungsprofil 13 ein, das eine T-förmige Querschnittsform aufweist. Das Dichtungsprofil 13 enthält an die Stahlkugeln 7 angepasste Durchbrüche 14 zum Halten des Dichtungsprofils 13, wobei das Dichtungsprofil 13 die Stahlkugeln 7 abschnittsweise umgreift. Jeweils ein Kugelsegment der Stahlkugeln 7 ist von den Durchbrüchen 14 aufgenommen. Das Dichtungsprofil 13 verschließt den Ringspalt 12 zwischen den Rundlaufschienen 5, 6 im Bereich der Führungsleiste 8 randseitig. Es überlappt außerdem die obere Rundlaufschiene 6 und die untere Rundlaufschiene 5 an der Außenumfangsseite. Außerdem weist die obere Rundlaufschiene 6 auf der Innenumfangsseite eine ausgebildete Verzahnung 15 auf, die mit einem Antriebszahnrad 16 eines in der Zeichnung nicht dargestellten Antriebs kämmt.

Die Figur 3 zeigt das vorstehend beschriebene Rundlaufschienenpaar 4 in Draufsicht. Teilweise ist die obere Rundlaufschiene 6 nicht dargestellt, um einen Blick auf die untere Rundlaufschiene 5 zu ermöglichen. Das in der Figur 2 dargestellte Dichtungsprofil 13 ist in der Figur 3 nicht gezeigt. Damit wird ein direkter Blick auf die untere Rundlaufschiene 5 ermöglicht. Dargestellt ist die obere Rundlaufschiene 6 mit der Verzahnung 15, von der sich die in der Figur 2 gezeigte mittlere Führungsleiste 11 in Richtung der unteren Rundlaufschiene 5 erstreckt. Sichtbar sind bei unteren Rundlaufschiene 5 die beiden seitlichen Führungsleisten 8, 9 sowie der Zwischenraum 10 zwischen den in Doppelreihe angeordneten Stahlkugeln 7. Die Stahlkugeln 7 der ersten Wälzkörperreihe 17 sind gegenüber den Stahlkugeln 7 der zweiten Wälzkörperreihe 18 in Umfangsrichtung der Rundlaufschienen 5, 6 versetzt angeordnet. Sie weisen zudem in Umfangsrichtung des Rundlaufschienenpaars 4 zusätzlich einen Abstand zueinander auf. Der Abstand wird von Distanzstücken 19 aus Kunststoff bestimmt.

## Patentansprüche

1. Gebäude (1), mit einem feststehenden Gebäudeunterteil (2) und einem darauf drehbar gelagerten Gebäudeoberteil (3), mit einem Rundlaufschienenpaar (4), das einander zugeordnete, gegeneinander verdrehbare ringförmige Rundlaufschienen (5, 6) aufweist, die eine rotatorische Bewegung des Gebäudeoberteils (3) gegenüber dem Gebäudeunterteil (2) um eine räumlich feste vertikale Achse im Zentrum des Rundlaufschienenpaares (4) ermöglichen, wobei eine untere Rundlaufschiene (5) an einer oberen Tragkonstruktion des Gebäudeunterteils (2) und eine obere Rundlaufschiene (6) an einer unteren Trägkonstruktion des Gebäudeoberteils (3) drehfest angeordnet ist, wobei die untere Rundlaufschiene (5) U-förmig mit nach oben gerichteten seitlichen Führungsleisten (8) ausgebildet ist, die eine fortlaufende Folge von Wälzkörpern (7) zwischen den Führungsleisten (8) aufnimmt, auf denen sich die obere Rundlaufschiene (6) abstützt, **dadurch gekennzeichnet, dass** die Wälzkörper (7) in Umfangsrichtung der unteren Rundlaufschiene (5) durch Abstandshalter (19) voneinander beanstandet sind.

2. Gebäude nach Anspruch 1, **dadurch gekennzeichnet, dass** die Wälzkörper (7) mindestens zweireihig in der unteren Rundlaufschiene (5) angeordnet sind.

3. Gebäude nach Anspruch 2, **dadurch gekennzeichnet, dass** die Wälzkörper (7) in Querrichtung der unteren Rundlaufschiene (5) voneinander beabstandet sind.

4. Gebäude nach einem der vorangegangenen Ansprüche, **dadurch gekennzeichnet, dass** die Wälzkörper (7) Stahlkugeln sind, die vorzugsweise einen typischen Durchmesser von 40 mm aufweisen.

5. Gebäude nach einem der vorangegangenen Ansprüche, **dadurch gekennzeichnet, dass** die Wälzkörper (7) Stahlwalzen sind, die vorzugsweise eine typischen Durchmesser von 90 mm aufweisen.

6. Gebäude nach einem der vorangegangenen Ansprüche, **dadurch gekennzeichnet, dass** zwischen der oberen Rundlaufschiene (6) und der unteren Rundlaufschiene (5), zumindest auf der dem Zentrum der Rundlaufschienen (5, 6) abgewandten Seite, ein sich in Umfangsrichtung erstreckendes Dichtungsprofil (13) angeordnet ist.

7. Gebäude nach Anspruch 6, **dadurch gekennzeichnet, dass** das Dichtungsprofil (13) an die Wälzkörper (7) angepasste Durchbrüche (14) aufweist, in die die Wälzkörper (7) zum Halten des Dichtungsprofils (13) eingreifen.

8. Gebäude nach einen der vorangegangenen Ansprüche, **dadurch gekennzeichnet, dass** an der oberen Rundlaufschiene (6) eine umlaufende Verzahnung (15) ausgebildet ist, die mit einem Antriebszahnrad (16) kämmt.

## Claims

1. A building (1) with a fixed building lower portion (2) and a building upper portion (3) rotatably mounted thereon, a pair of rotation tracks (4), which includes annular rotation tracks (5, 6), which are directed towards one another and are rotatable with respect to one another and enable rotary movement of the building upper portion (3) with respect to the building lower portion (2) about a spatially fixed vertical axis in the centre of the pair of rotation tracks (4), wherein a lower rotation track (5) is rotationally fixedly arranged on an upper support structure of the building lower portion (2) and an upper rotation track (6) is rotationally fixedly arranged on a lower support structure of the building upper portion (3), wherein the lower rotation track (5) is of U shape with upwardly directed lateral guide plates (8), which accommodate a successive sequence of roller bodies (7) between the guide plates (8), on which the upper rotation track (6) bears, **characterised in that** the roller bodies (7) are spaced from one another in the circumferential direction of the lower rotation track (5) by spacers (19).

2. A building as claimed in Claim 1, **characterised in that** the roller bodies (7) are arranged in at least two rows in the lower rotation track (5).

3. A building as claimed in Claim 2, **characterised in that** the roller bodies (7) are spaced from one another in the transverse direction of the lower rotation track (5).

4. A building as claimed in one of the preceding claims, **characterised in that** the roller bodies (7) are steel balls, which preferably have a typical diameter of 40 mm.

5. A building as claimed in one of the preceding claims, **characterised in that** the roller bodies (7) are steel rollers, which preferably have a typical diameter of 90 mm.

6. A building as claimed in one of the preceding claims, **characterised in that** arranged between the upper rotation track (6) and the lower rotation track (5), at least on the side remote from the centre of the rotary tracks (5, 6), there is a sealing profile (13) extending in the circumferential direction.

7. A building as claimed in Claim 6, **characterised in that** the sealing profile (13) has openings (14) which are matched to the roller bodies (7) and in which the roller bodies (7) engage for holding the sealing profile (13).

8. A building as claimed in one of the preceding claims, **characterised in that** constructed on the upper rotation track (6) there is a circular set of teeth (15), which meshes with a toothed drive wheel (16).

## Revendications

1. Bâtiment (1), avec une partie inférieure fixe (2) de bâtiment et une partie supérieure (3) de bâtiment montée à rotation sur la précédente, avec une paire (4) de rails de rotation qui présente des rails de rotation annulaires (5,6) se faisant face et rotatifs l'un par rapport à l'autre qui permettent un mouvement de rotation de la partie supérieure (3) de bâtiment par rapport à la partie inférieure (2) de bâtiment autour d'un axe vertical spatialement fixe au centre de la paire (4) de rails de rotation, sachant qu'un rail de rotation inférieur (5) est disposé en solidarité de rotation sur une structure porteuse supérieure de la partie inférieure (2) de bâtiment et qu'un rail de rotation supérieur (6) est disposé en solidarité de rotation sur une structure porteuse inférieure de la partie supérieure (3) de bâtiment, sachant que le rail de rotation inférieur (5) est réalisé en forme de U avec des glissières de guidage latérales (8) dirigées vers le haut et reçoit entre les glissières de guidage (8) une suite continue de corps de roulement (7) sur lesquels s'appuie le rail de rotation supérieur (6), **caractérisé en ce que** les corps de roulement (7) sont espacés les uns des autres par des écarteurs (19) dans la direction périphérique du rail de rotation inférieur (5).

2. Bâtiment selon la revendication 1, **caractérisé en ce que** les corps de roulement (7) sont disposés en au moins deux rangées dans le rail de rotation inférieur (5).

3. Bâtiment selon la revendication 2, **caractérisé en ce que** les corps de roulement (7) sont espacés les uns des autres dans la direction transversale du rail de rotation inférieur (5).

4. Bâtiment selon l'une des revendications précédentes, **caractérisé en ce que** les corps de roulement (7) sont des billes en acier qui présentent de préférence un diamètre typique de 40 mm.

5. Bâtiment selon l'une des revendications précédentes, **caractérisé en ce que** les corps de roulement (7) sont des rouleaux en acier qui présentent de préférence un diamètre typique de 90 mm.

6. Bâtiment selon l'une des revendications précédentes, **caractérisé en ce qu'**un profilé d'étanchéité (13) s'étendant en direction périphérique est disposé entre le rail de rotation supérieur (6) et le rail de rotation inférieur (5), au moins sur le côté opposé au centre des rails de rotation (5, 6).

7. Bâtiment selon la revendication 6, **caractérisé en ce que** le profilé d'étanchéité (13) présente des brèches (14) adaptées aux corps de roulement (7), dans lesquelles les corps de roulement (7) s'engagent afin de maintenir le profilé d'étanchéité (13).

8. Bâtiment selon l'une des revendications précédentes, **caractérisé en ce qu'**une denture (15) est formée sur toute la circonférence sur le rail de rotation supérieur (6) et engrène avec une roue dentée d'entraînement (16).
